## Europäisches Patentamt

## European Patent Office

## Office européen des brevets

(19)

(11) Numéro de publication: **0 208 179**
**B1**

(12) **FASCICULE DE BREVET EUROPÉEN**

(45) Date de publication du fascicule du brevet:
**10.08.88**

(51) Int. Cl.⁴: **F 24 F 13/10,** F 16 K 31/08

(21) Numéro de dépôt: **86108365.7**

(22) Date de dépôt: **19.06.86**

(54) **Soupape automatique de régulation du débit d'air soutiré d'un local par une installation de ventilation mécanique.**

(30) Priorité: **01.07.85 CH 2800/85**

(43) Date de publication de la demande:
**14.01.87 Bulletin 87/3**

(45) Mention de la délivrance du brevet:
**10.08.88 Bulletin 88/32**

(84) Etats contractants désignés:
**AT BE CH DE FR GB IT LI LU NL SE**

(56) Documents cité:
**CH-A-580 258**
**FR-A-1 417 994**

(73) Titulaire: **Thiebaud, Marius, 301, Route de Suisse, CH- 1298 Celigny (CH)**

(72) Inventeur: **Thiebaud, Marius, 301, Route de Suisse, CH- 1298 Celigny (CH)**

(74) Mandataire: **Micheli, Michel- Pierre, MICHELI & CIE 118, Rue du Rhône Case Postale 47, CH- 1211 Genève 6 (CH)**

LIBER, STOCKHOLM 1988

## Description

Beaucoup de bâtimens sont équipés d'installations de ventilation mécaniques comprenant un canal central débouchant généralement sur le faîte du bâtiment dans lequel on crée une aspiration d'air à l'aide d'un ventilateur. Chaque local devant être ventilé est raccordé à ce canal central par un canal secondaire par l'intermédiaire d'une soupape automatique permettant de réduire le débit horaire d'air soutiré au local considéré lorsque celui-ci n'est pas occupé afin de diminuer les déperditions de calories.

De telles soupapes de régulation de débit d'air ont été proposées et sont décrites par exemple dans les brevets CH-A-569 938; CH-A-579 244 et CH-A-580 258. Ces soupapes existantes ne donnent toutefois pas entièrement satisfaction car elles consomment pour leur commande de l'énergie électrique en permanence, elles font du bruit notamment lors de leur fermeture et souvent lorsqu'elles sont en position de débit minimum elles provoquent un sifflement dû au laminage de l'air.

La présente invention a pour objet une soupape automatique de régulation du débit d'air soutiré d'un local par une installation de ventilation mécanique tendant à obvier aux inconvénients des soupapes précitées. Cette soupape automatique se distingue par les caractéristiques énumérées à la revendication 1.

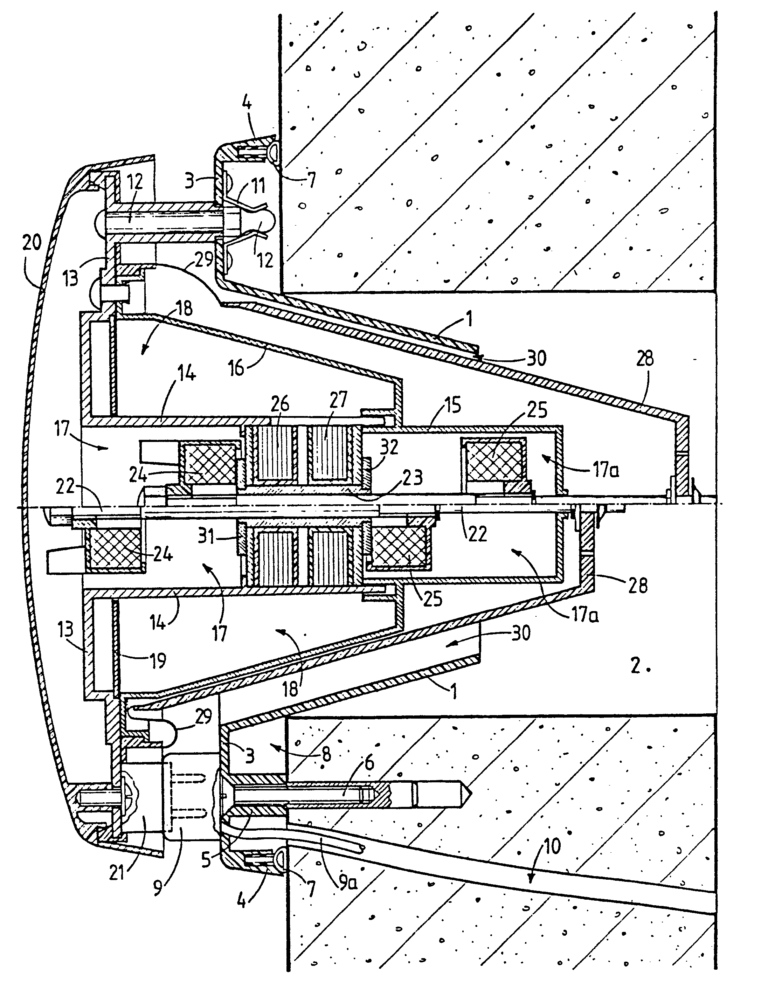

La figure unique du dessin annexé illustre schématiquement et à titre d'exemple une coupe axiale de la soupape dans ses deux positions de fonctionnement.

La soupape automatique illustrée comporte une partie fixe, destinée à être fixée rigidement contre un mur à l'embouchure d'un canal de ventilation secondaire, et une partie amovible contenant l'organe de réglage du débit et son dispositif de commande.

La partie fixe est formée d'une couronne, généralement en matière plastique, circulaire présentant une jupe conique centrale 1 s'étendant à l'intérieur du canal de ventilation secondaire 2, ainsi qu'un rebord 3 dont la paroi externe 4 repose contre la face frontale de la paroi autour du canal de ventilation 2. Ce rebord 3 comporte des canons 5 destinés à donner passage à des vis 6 pour la fixation de cette partie fixe contre le mur.

La paroi externe 4 du rebord est munie d'un joint souple 7 s'écrasant contre le mur assurant l'étanchéité entre ce mur et la partie fixe de la soupape évitant ainsi tout soutirage d'air entre le mur et cette partie fixe et donc tout dépôt de souillure autour de cette partie fixe de la soupape.

Le rebord 3, 4 de la partie fixe de la soupape définit avec le mur un logement annulaire 8.

Une prise femelle 9 est fixée sur le rebord 3 et peut être reliée à un câble électrique 9a débouchant d'un conduit 10 pratiqué dans le mur sous le rebord 3. Ainsi, la connexion électrique est entièrement cachée.

Le rebord 3 de la partie fixe comporte encore des organes d'encliquetage 11 de la partie mobile formée par des supports solidaires du rebord 3 dont la partie frontale présente une ouverture élastiquement déformable destinée à donner passage à un téton 12 solidaire de la partie amovible de la soupape. Ces tétons de fixation 12 sont portés par une plaque annulaire 13 solidaire d'un cylindre central 14 coopérant avec une pièce présentant une partie cylindrique 15 s'emboîtant sur le bord libre du cylindre 14 et une partie tronconique 16 fixée à la plaque 13. Ces deux pièces 13, 14 et 15, 16 forment le corps de la partie amovible de la soupape et définissent un logement central cylindrique 17, 17a recevant le dispositif d'actionnement de la soupape ainsi qu'un logement annulaire 18 renfermant certains éléments électroniques de la commande de la soupape, portés par exemple par un circuit imprimé 19.

Une calotte 20 est fixée sur la plaque 13 et constitue la partie visible de la soupape lorsqu'elle est en service.

Cette plaque 13 porte également une fiche mâle 21 coopérant en position de service, encliquetée sur la partie fixe, avec la prise 9 de cette partie fixe permettant l'alimentation du dispositif d'actionnement de la soupape.

Le dispositif d'actionnement de la soupape comporte un axe central 22 coulissant dans un tube 23 solidaire de la pièce 13, 14 et portant deux aimants permanents 24, 25 situés respectivement dans les logements 17, 17a. L'un au moins de ces aimants permanents 24 est fixé de façon réglable sur l'axe 22 pour permettre de varier la distance séparant ces deux aimants 24, 25.

Autour du tube 23 sont disposés deux enroulements 26, 27 alimentés par le dispositif de commande.

L'extrémité libre de l'axe 22 traverse le fond de la partie cylindrique 15 et est fixée au centre d'une membrane d'obturation 28 en caoutchouc synthétique ou naturel dont le bord est fixé à la plaque 13. Cette membrane 28 comporte une partie très souple 29, tandis que le reste de celle-ci est relativement rigide et forme une paroi s'étendant entre la jupe 1 et la paroi externe de la pièce 16 délimitant un passage 30 de section variable suivant la position de l'axe 22 et donc de la membrane 28.

En service normal la soupape est dans l'état illustré dans la moitié supérieure de la figure du dessin. L'aimant permanent 24 plaque sur la rondelle de fer doux 31 et maintient l'axe 22 et la membrane 28 dans leur position avancée pour laquelle le passage 30 présente une faible section. Ainsi le débit d'air évacué est réduit pour diminuer la perte de calories. La soupape reste dans cet état tant que le local dans lequel elle est installée n'est pas utilisé.

Par contre, dès que le local est en service et que l'utilisateur allume l'électricité dans ce local, les bobines 26, 27 sont mises sous tension pendant un laps de temps déterminé, relativement court, de manière à créer un champ magnétique repoussant l'aimant permanent 24 et attirant l'aimant permanent 25 provoquant le passage de la soupape à son état ouvert illustré au bas de la figure du dessin pour lequel la section du passage 30 est grande.

L'axe 22 a reculé, la membrane 28 s'est rapprochée de la paroi 16 et ces éléments sont maintenus dans cette position par l'aimant permanent 25 bloquant sur la rondelle de fer doux 32. Le courant passant dans les enroulements 26, 27 est interrompu après quelques secondes.

Pour remettre la soupape en position de faible débit, il suffit de créer momentanément un champ magnétique inverse à l'aide des bobines 26, 27 provoquant le déplacement de l'axe 22 dans le sens opposé.

L'intérêt de cette solution réside dans l'utilisation d'aimants permanents limitant l'énergie dépensée pour le fonctionnement de la soupape à quelques impulsions de faible durée. On réalise ainsi une économie d'énergie et évite toute surchauffe.

Il est évident qu'à l'aide de la commande électronique il est possible d'introduire un retard au retour à l'état fermé de la soupape après que l'usager ait éteint l'électricité du local. Retard dont la durée peut être prédéterminé.

La commande de la soupape peut également être autonome est non branchée sur l'éclairage du local.

Les principaux avantages de la soupape décrite sont les suivants:

1. Son raccordement électrique est invisible, caché par la partie fixe de la soupape fixée au mur.

2. Elle comporte une partie amovible, encliquetable sur la partie fixe, permettant son retrait aisé pour effectuer le nettoyage du canal d'air notamment.

3. Le branchement électrique du dispositif d'actionnement de la soupape logé dans la partie amovible de celle-ci s'effectue automatiquement lors de l'encliquetage de cette partie amovible sur la partie fixe.

4. Les enroulements moteurs de la soupape provoquant ses changements d'états ne sont pas en permanence sous tension, réduisant ainsi la consommation d'énergie, le dégagement de calories et le bruit.

5. La section de passage d'air est réglable en modifiant la distance entre les aimants permanents portés par l'axe 22.

6. L'écoulement de l'air s'effectue de façon laminaire du fait de la forme du passage 30 ce qui évite les bruits et sifflements.

La commande électronique du dispositif d'actionnement est réalisée à l'aide d'éléments existants. Il faut, lorsque du courant électrique alternatif est délivré à la fiche 9 provoquer le passage d'un courant continu dans les enroulements 26, 27 pendant un temps déterminé et lors de l'interruption de l'alimentation en courant alternatif, après un temps d'attente prédéterminé, provoquer le passage d'un courant continu de sens inverse pendant un laps de temps déterminé dans les enroulements 26, 27.

Ceci peut être réalisé à l'aide d'un redresseur, d'un inverseur, d'un accumulateur et de circuits de retard d'une façon conventionnelle. Tous ces éléments de la commande sont logés dans l'espace 18 de la partie amovible de la soupape.

Une des particularités les plus importantes de cette soupape réside dans le fait que ses positions "ouverte" respectivement "fermée" ou à débit réduit sont toutes deux des positions stables dans lesquelles les organes mobiles de la soupape restent en place naturellement, sous l'effet des aimants permanents, sans dépense d'énergie ni utilisation de ressorts ou autre élément mécanique soumis à la fatigue.

**Revendications**

1. Soupape automatique de régulation du débit d'air soutiré d'un local par une installation de ventilation mécanique comprenant un canal (30) pour l'air aspiré dont la section dépend de la position d'un organe d'obturation (28) soumis à l'action d'un dispositif d'actionnement (22 à 27) lui-même commandé par un dispositif de commande, caractérisée par le fait que le dispositif d'actionnement (22 à 27) de l'organe d'obturation (28) comporte un axe (22) coulissant axialement dans une partie (23) du bâti de la soupape, par le fait que l'une des extrémités de cet axe est solidaire de l'organe d'obturation (28), par le fait que cet axe (22) porte deux aimants (24, 25) permanents, coopérant chacun avec une pièce en fer doux (31, 32) fixée au bâti, séparés l'un de l'autre par une distance définissant l'amplitude du mouvement axial de l'organe d'obturation; par le fait quelle comporte fixé sur son bâti et situé entre lesdits aimants (24, 25) au moins un enroulement (26, 27) permettant de créer un champ magnétique et par le fait que le dispositif de commande présente des moyens (9, 21) permettant d'alimenter cet enroulement (26, 27) en courant continu alternativement dans un sens et dans l'autre pendant un laps de temps déterminé.

2. Soupape selon la revendication 1, caractérisée par le fait que les pièces en fer doux (31, 32) sont situées de part et d'autre des enroulements et fixées au bâti et constituées par des rondelles.

3. Soupape selon la revendication 1 ou la revendication 2, caractérisée par le fait qu'au moins l'un (25) des aimants permanents (24, 25) est fixé sur l'axe (22) de façon réglable permettant de modifier la distance séparant les deux aimants et ainsi la course axiale dudit axe.

4. Soupape selon l'une des revendications précédentes, caractérisée par le fait que l'organe d'obturation est une membrane (28) présentant un fond et une paroi tronconique rigide, le fond

étant relié à l'axe (22) coulissant, la périphérie de la partie tronconique étant reliée par une partie souple (29) au bâti de la soupape.

5. Soupape selon l'une des revendications précédentes, caractérisée par le fait qu'elle comporte une partie fixe destinée à être fixée sur un mur comprenant une jupe tronconique (1) s'étendant dans un canal secondaire de ventilation (2) et un rebord (3, 4) recouvrant une partie de la paroi entourant ce canal, ainsi qu'une partie amovible (13, 14, 15, 16) encliquetable sur cette partie fixe (1, 3, 4).

6. Soupape selon la revendication 5, caractérisée par le fait que la partie amovible (13, 14, 15, 16) comprend l'organe d'obturation (28) et les dispositifs d'actionnement (22 à 27) et de commande (19).

7. Soupape selon la revendication 6, caractérisée par le fait que la partie fixe (1 ,3, 4) comporte une prise (9) et la partie amovible (13 à 16) une fiche (21) coopérant en position encliquetée de ces parties pour alimenter les dispositifs de commande et d'actionnement en courant électrique.

8. Soupape selon les revendications 4 et 5, caractérisée par le fait que la partie tronconique rigide de l'organe d'obturation (28) s'étend approximativement parallèlement à la jupe (1) de la partie fixe de la soupape.


**Patentansprüche**

1. Selbsttätige bzw. automatische Klappe zur Regelung der aus einemn Raum durch eine Zwangsentlüftung abgesaugten Luftmenge umfassend einen Ansaugluftkanal (3), dessen Querschnitt von der Stellung eines Schließorgans (28) abhängt, das von einem Betätigungsorgan (22 bis 27) gesteuert wird, das selbst wiederum von einer Steuervorrichtung gesteuert wird, dadurch gekennzeichnet, daß das Betätigungsorgan (22 bis 27) des Schließorgans (28) eine axial in einem Teil (23) des Gehäuses der Klappe gleitende Achse (22) aufweist, daß eines der Enden dieser Achse fest mit dem Schließorgan (28) verbunden ist, daß diese Achse (22) zwei Permanentmagneten (24, 25) trägt, von denen jeder mit einem Weicheisenstück (31, 32) zusammenwirkt, das am Gehäuse befestigt ist, und die voneinander durch einen Abstand getrennt sind, der die Amplitude der Axialbewegung des Schließorgans definiert bzw. begrenzt; daß die Klappe an ihrem Gehäuse befestigt und zwischen den genannten Magneten (24, 25) angeordnet wenigstens eine Wicklung (26, 27) aufweist, die die Erzeugung eines Magnetfeldes ermöglicht und daß die Steuervorrichtung Einrichtungen (9, 21) aufweist, die die Energieversorgung dieser Wicklungen (26, 27) mit Gleichstrom alternativ in einer Richtung und in der anderen während eines vorgegebenen Zeitraums ermöglichen.

2. Klappe nach Anspruch 1, dadurch gekennzeichnet, daß die Weicheisenstücke (31, 32) beiderseits der Wicklungen am Gehäuse befestigt sind und von Ringen gebildet werden.

3. Klappe nach Anspruch 1 oder 2, dadurch gekennzeichnet, daß wenigstens einer (25) der Permanentmagneten (24, 25) auf der Achse (22) einstellbar befestigt ist, sodaß der Abstand, der die beiden Permanentmagneten trennt und somit der axiale Hub der Achse einstellbar ist.

4. Klappe nach einem der vorhergehenden Ansprüche, dadurch gekennzeichnet, daß das Schließorgan eine Membran (28) ist, die einen Boden und eine starre kegelstumpfförmige Wand aufweist, wobei der Boden mit der gleitenden Achse (22) verbunden ist und der Umfang des kegelstumpfförmigen Teils über einen biegsamen Teil (29) mit dem Gehäuse der Klappe verbunden ist.

5. Klappe nach einem der vorhergehenden Ansprüche, dadurch gekennzeichnet, daß sie sowohl einen feststehenden Teil aufweist, der dazu bestimmt ist, an einer Mauer befestigt zu werden, umfassend einen kegelstumpfförmigen Mantel (1), der in einem Sekundärbelüftungskanal (2) untergebracht ist, und einen Rand (3, 4) der einen Teil der diesen Kanal umgebenden Wand abdeckt, als auch einen lösbaren Teil (13, 14, 15, 16) aufweist, der auf diesen feststehenden Teil (1, 3, 4) aufklemmbar ist.

6. Klappe nach Anspruch 5, dadurch gekennzeichnet, daß der lösbare Teil (13, 14, 15, 16) das Schließorgan (28) und die Betätigungsvorrichtungen (22 bis 27) und die Steuervorrichtung (19) umfaßt.

7. Klappe nach Anspruch 6, dadurch gekennzeichnet, daß der feststehende Teil (1, 3, 4) eine Steckdose (9) und der lösbare Teil (13 bis 16) einen Stecker (21) aufweist, die in der zusammengeklemmten bzw. -gesteckten Stellung dieser Teile zusammenwirken, um die Steuer- und Betätigungsvorrichtungen mit elektrischem Strom zu versorgen.

8. Klappe nach Anspruch 4 und 5, dadurch gekennzeichnet, daß der starre, kegelstumpfförmige Teil des Schließorgans (28) sich annähernd parallel zum Mantel (1) des feststehenden Teiles der Klappe erstreckt.


**Claims**

1. Automatic regulating valve of the air flow sucked out from a room through a mechanical ventilation installation comprising a channel (30) to suck air the cross-section of which depends from the position of an obturating member (28) submitted to the action of an actuating device (22 to 27) itself controlled by a control device, characterized by the fact that the actuating device (22 to 27) of the obturation member (28) comprises an axis (22) sliding axially in a portion (23) of the body of the valve, by the fact that one end of this axis is fast with the obturation member (28), by the fact that this axis (22) carries two permanent magnets (24, 25), each cooperating with a soft iron part (31, 32), fixed to the body, separated the one from the other by a distance defining the amplitude of the axial displacement of the obturation member ; by the fact that it comprises fixed on its body and located between the said magnets (24, 25) at least one coil (26, 27) enabling to create a magnetic field and by the fact that the control device has means (9, 21) permitting to feed this coil (26, 27) with a direct current alternatively in one and the other directions during a given time interval.

2. Valve according to claim 1 characterized by the fact that the soft iron parts (31, 32) are located on either side of the coils and fastened to the body, and constituted by washers.

3. Valve according to claim 1 or to claim 2, characterized by the fact that at least one (25) of the permanent magnets (24, 25) is fixed onto the axis (22) in a adjustable manner permitting to modify the distance separating the two magnets and thus the axial stroke of said axis.

4. Valve according to one of the preceding claims, characterized by the fact that the obturation member is formed by a membrane (28) presenting a bottom and a frustoconical rigid wall, the bottom being connected to this sliding axis (22), the periphery of the frustoconical portion being connected through a souple portion (29) to the body of the valve.

5. Valve according to one of the preceding claims, characterized by the fact that it comprises a fixed portion intended to be fixed onto a wall comprising a frustoconical skirt (1) extending within a secondary ventilation channel (2) and a flange (3, 4) covering a part of the wall surrounding the channel, as well as a removable portion (13, 14, 15, 16) which can be plugged in said fixed portion (1, 3, 4).

6. Valve according to claim 5 characterized by the fact that the removable portion (13, 14, 15, 16) comprises the obturation member (28), the actuating device (22 to 27) and the control device (19).

7. Valve according to claim 6 characterized by the fact that the fixed portion (1, 3, 4) comprises a plug (9) and the removable portion (13 to 16) comprises a plug (21) cooperating in plugged in position of these portions, to feed the control device and actuating device with electrical current.

8. Valve according to claims 4 and 5 characterized by the fact the rigid frustoconical portion of the obturation member (28) extends approximatively parallely to the skirt (1) of the fixed portion of the valve.